# EUROPEAN PATENT APPLICATION

(11) **EP 4 120 110 A1**
(43) Date of publication of application: **18.01.2023**
(21) Application number: 21185036.7
(22) Date of filing: 12.07.2021
(51) Int. Cl.: G06F 21/55, G06F 11/07

(54) **OPC UA-BASED ANOMALY DETECTION AND RECOVERY SYSTEM AND METHOD**

(71) Applicant: ABB SCHWEIZ AG, 5400 Baden (CH)
(72) Inventor: KOZIOLEK, Heiko, 76227 Karlsruhe (DE); GRUENER, Sten, 68549 Ilvesheim (DE); RUECKERT, Julius, 63225 Langen (DE); BURGER, Andreas, 76356 Weingarten (DE)
(74) Representative: Maiwald GmbH

(57) **Abstract**

The invention relates to an anomaly detection and recovery system (ADRS) (100) for an OPC UA-based industrial automation network (110) that comprises OPC UA devices (102). The ADRS (100) comprises an anomaly detector (208), configured to monitor an OPC UA traffic stream comprising OPC UA messages of the OPC UA devices (102) and to analyze the OPC UA traffic stream using OPC UA semantics of the industrial automation network (110) for anomaly detection.

## Description

### Field of the invention

The invention relates to an anomaly detection and recovery system, an OPC UA network system, a method for detecting anomalies in an OPC UA-based industrial automation network system, a program element, a computer readable medium, and a use of an anomaly detection and recovery system in an OPC UA network system.

### Background

Critical plant networks may be subject to anomalies, i.e. irregularities in the communication, which can point to problems in the production process, programming errors, hardware failures, or malicious security attacks. This problem becomes even more severe in open automation systems composed out of subsystems from different vendors. Existing network intrusion detection systems (e.g., OSSEC, Sagan, Snort, splunk, etc.) operate on the level of TCP/IP traffic and may generate a lot of noise from various sources that obstructs filtering out relevant events. Existing anomaly detection tools on industrial data often operate offline, analyzing recorded data sets and making predictions on possible anomalies. Both kind of systems do not analyze the anomalies in detail or initiate recovery actions, since they lack an understanding of the domain- and system-specific communication semantics. Existing human machine interfaces of distributed control systems provide domain- and plant-specific alarm and events but rely on pre-engineered thresholds and cannot detect complicated anomaly patterns on-the-fly.

These issues may lead to many undetected anomalies. Moreover, regular anomaly detection system may focus on specific IT-attacks without considering application domain-specific anomalies (e.g., bad sensor data). These systems may require human operators to perform tedious analysis processes and root cause identification. They also require human operators to perform recovery actions, since they are pure monitoring systems that cannot interact with a distributed control system.

### Summary of the invention

An objective of the invention may be to provide an improved anomaly detection system in an OPC UA network.

The problem is solved by the subject-matter of the independent claims. Embodiments are provided by the dependent claims, the following description and the accompanying figures.

The described embodiments similarly pertain to the anomaly detection and recovery system, the OPC UA network system, the method for detecting anomalies in an OPC UA-based industrial automation network system, the program element, the computer readable medium, and the use of an anomaly detection and recovery system in an OPC UA network. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, an anomaly detection and recovery system (ADRS) for an OPC UA-based industrial automation network that comprises OPC UA devices is provided. The ADRS comprises an anomaly detector, configured to monitor an OPC UA traffic stream comprising OPC UA messages of the OPC UA devices and to analyze the OPC UA traffic stream using OPC UA semantics of the industrial automation network for anomaly detection.

The anomaly detector monitors specifically the OPC UA messages exchanged between client/servers and publishers/subscribers within the system. The system, in particular the anomaly detector, has knowledge on the standardized OPC UA information models encoded and can therefore perform a deep inspection of the respective communication. For example, the system can check for implausible configuration parameters being exchanged between clients/servers or detect irregularities for specific sensor values that are only identifiable due their standardized semantics. Therefore, the anomaly detector investigates the OPC UA traffic, using OPC UA semantics, of which it is aware, and can analyze OPC UA messages in detail. The OPC UA semantics is, for example, available from the standard specifications and companion standards. In contrast, existing anomaly detectors can only analyze basic characteristics of OPC UA messages without understanding their semantics.

According to an embodiment, the anomaly detection and recovery system further comprises an anomaly finder, configured for connecting autonomously to OPC UA devices and analyze the OPC UA devices, and to report identified anomalies to the anomaly detector.

The anomaly finder may be configured to connect autonomously to OPC UA servers on the OPC UA devices to browse address spaces, search for irregularities and create fingerprints to detect later tampering. In contrast, existing anomaly detection tools rely on pure monitoring of the network without an active component seeking information from servers. The anomaly finder may further be triggered by the anomaly detector to investigate anomalies that have been detected by the anomaly detector when monitoring the OPC UA traffic stream.

The active connection to devices and analysis of address space data augments the passive monitoring and enables detecting also problems that would otherwise not be easily detectable.

In case of inconclusive analysis of behavior or status information, extended traffic recording can be triggered to support offline analysis or capture network traces to collect evidence and document security breaches.

According to an embodiment, the anomaly detector comprises a rule engine configured to execute pre-defined domain-specific and/or plant-specific rules on the OPC UA traffic stream.

The domain-specific and/or plant-specific rules are a part of the input to the anomaly detection and recovery system, which may be stored in a memory outside the ADRS, e.g., files or data bases, and to which the ADRS has access. As any of the input, the rules may be imported and stored locally in the ADRS.

Anomaly detector hence includes a rule engine with pre-specified rules on, e.g., pre-filtered OPC UA traffic stream comprising OPC UA message exchanges. These rules may be generic, domain-specific, and/or plant-specific. The ADRS system utilizes semantic specifications from OPC UA companion standards to have generally applicable rules that are not plant-specific. For example, it would be aware of precise status information state according to NAMUR Recommendation 107 (NE107), which are encoded into the OPC UA device information model. For specific health states, it can issue predefined recovery actions.

In addition, the system features a machine-learning component that can be trained during initial plant start up. During later plant operation, the machine-learning model supports the ADRS in detecting plant-specific anomalies.

According to an embodiment, the anomaly finder is configured to connect to the OPC UA devices using at least one of OPC UA signal mapping data, network discovery data, and OPC UA credentials provided to the anomaly detection and recovery system.

The anomaly finder autonomously connects to OPC UA servers. As this may require authentication and certificate exchange, the ADRS is equipped with a plant-wide list of user credentials and public certificates, which may be pre-supplied. Further, the addresses of the OPC UA devices in the network are required for which OPC UA signal mapping data and network discovery data is provided to the anomaly finder. The system may use the ability to connect to OPC UA servers directly for example to browse their address spaces and detect misconfigurations or unusual session data. It can also assess the responsiveness of the OPC UA server and indicate slow-responding devices or changes in the responsiveness when browsing the address space. This may indicate an overloaded device or, e.g., a device affected by a memory leak in one of its software packages. The system may also use this ability to initiate recovery actions upon anomaly detections (e.g., reconfiguring an OPC UA server). A restriction to OPC UA traffic may reduce the noise coming from the ADRS compared to regular intrusion detection systems.

According to an embodiment, the anomaly finder is configured to analyze the OPC UA devices using plant engineering data.

Plant-specific rules can also include information on the plant structure, its devices and their behavior, derived from engineering data of the system. This allows basic anomaly detection. The plant engineering data may comprise signal mappings/configurations, device configurations, plant topology, control programs, etc. Existing tools are designed in an application-neutral and domain-independent way. They cannot utilize engineering data out-of-the-box.

According to an embodiment, the anomaly detection and recovery system further comprises an OPC UA traffic stream processor, configured to create a message stream from received OPC UA messages and to provide the traffic stream to the anomaly detector.

The OPC UA traffic stream processor may extract information required for identifying irregularities to the anomaly detector. It logs a snapshot of the monitored data or specific events (e.g., messages transferred in the last hour) into appropriate databases, so that the information is provided to detect anomalies over longer time periods.

According to an embodiment, the anomaly detection and recovery system further comprises a message receiver, configured to receive OPC UA messages from an OPC UA device and to provide the OPC UA messages to the OPC UA traffic stream processor.

There may be more than one message receiver. Each message receiver may be connected to at least one OPC UA device. The message receivers monitor OPC UA network traffic, i.e. message exchanges between clients/servers or publishers/subscribers, on different hosts in the system and/or network switches or routers. It may employ third-party libraries (e.g., libpcap) to monitor network traffic or make use of port mirroring in switches to obtain the messages sent and received. In containerized deployments, network probes might be even deployed as part of service mesh solutions or simple container sidecars. Message receivers can subscribe to OPC UA publisher/subscriber messages in the entire distributed control system. The anomaly detection system may contain a plant-wide mapping of signal references (tags) to multicast IP addresses, which is also used by the OPC UA publishers that feed these multicast IP addresses with publication messages.

Alternatively, in case the OPC UA communication is broker-based, the ADRS can connect to the broker(s) and monitor their internal network traffic.

Alternatively, in case of OPC UA hardware devices, message receivers may reside on parts of network infrastructure, e.g. firewalls. In this case, additional measures are needed to encrypt and inspect OPC UA traffic (in case encryption is activated). For this, intermediate certificates need to be rolled-out to OPC UA servers and clients. The intermediate receiver can terminate TLS sessions and inspect the traffic. Since no proxy configuration is supported for OPC UA, additional routing measures need to be taken to make sure all TCP/IP packets pass the host with an embedded message receiver.

According to an embodiment, the anomaly detection and recovery system further comprises an artificial neural network, and the anomaly detector is configured to use the artificial neural network for detecting anomalies.

A model trainer is used by the anomaly detector to employ a machine learning component that can use monitored OPC UA messaging data as "training data" to learn the "normal" behavior of the system, e.g., during a commissioning phase or during early runtime of the plant. For example, the machine-learning component can feed selected data on messages exchanges into the artificial neural network and later use this trained network during plant runtime to detect deviations to the "normal" OPC UA traffic.

According to an embodiment, the anomaly detection and recovery system further comprises an anomaly recoverer, configured to recover the system from the anomaly and/or to remove the anomaly.

Besides the detection, the ADRS can perform simple recovery action (e.g., fail-over of redundant components, redeploying components, blocking traffic, etc.) autonomously and much faster than a human operator. Due to its domain-specific knowledge about the system that may include engineering data, the ADRS can perform some recovery actions autonomously. For example, recovering the system and/or removing the anomaly may comprise invoking a fail-over controller for redundant standby, suspending an auxiliary subsystem or blocking traffic to the auxiliary subsystem upon detecting bad quality messages, failing-over to indirect measurement from other sensors in case of bad quality data or re-deploying the control application to a different node (e.g., with low latency mode) upon detecting violated jitter thresholds or detected changes in network conditions and load. Further actions may comprise resizing CPU/memory claims of control applications or starting additional instances (horizontal scaling) upon alarm floods, notifying individual OPC UA servers for anomalies to trigger internal recovery mechanisms (e.g., disconnecting all clients), re-routing network traffic upon continuous late messages, which may include the trigger of a reconfiguration of network equipment, etc.

According to a further aspect, an OPC UA network system comprising an anomaly detection and recovery system as described herein is provided.

According to a further aspect, a method for detecting anomalies in an OPC UA-based industrial automation network system comprising OPC UA devices is provided, wherein a detection and recovery system (ADRS) for an OPC UA-based industrial automation network comprises OPC UA devices, and wherein the ADRS comprises an anomaly detector and the network comprises OPC UA devices. The method comprises the following steps: monitoring, by the anomaly detector, an OPC UA traffic stream comprising OPC UA messages of the OPC UA devices, and analyzing, by the anomaly detector, the OPC UA traffic stream using OPC UA semantics of the industrial automation network for anomaly detection.

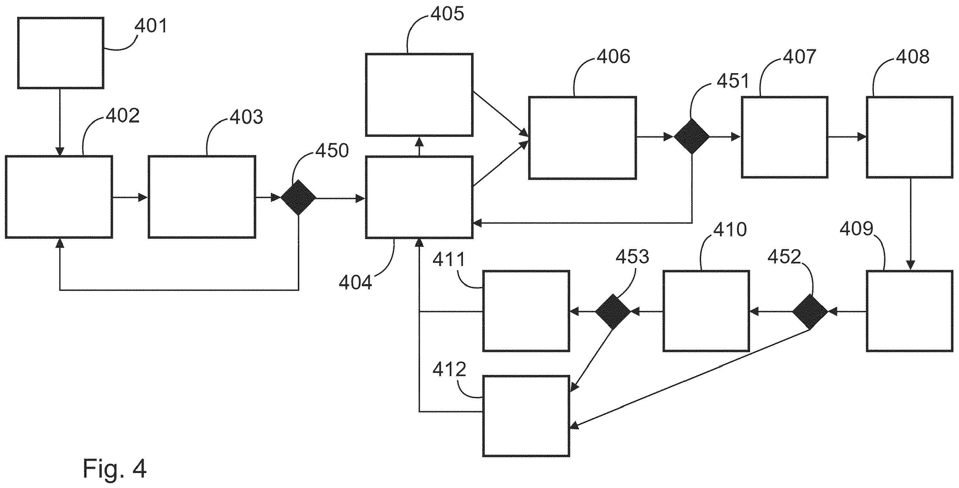

Fig. 4 and its description further below show a more detailed method.

According to a further aspect, a program element is provided, which, when executed on a processor of the anomaly detection and recovery system as described herein, instructs the anomaly detection and recovery system to perform the steps of the method provided herein.

The computer program element may be part of a computer program, but it can also be an entire program by itself. For example, the computer program element may be used to update an already existing computer program to get to the present invention. The controller may comprise circuits without programmable logics or may be or comprise a micro controller, a field programmable gate array (FPGA), an ASIC, a Complex Programmable Logic Devices (CPLD), or any other programmable logic devices known to person skilled in the art.

According to a further aspect, a computer readable medium on which the program element is stored is provided.

The computer readable medium may be seen as a storage medium, such as for example, a USB stick, a CD, a DVD, a data storage device, a hard disk, or any other medium on which a program element as described above can be stored.

According to a further aspect, a use of an anomaly detection and recovery system in an OPC UA network system as described herein is provided.

These and other features, aspects and advantages of the present invention will become better understood with reference to the accompanying figure and the following description.

### Short description of the figures

Fig. 1 shows a block diagram of an OPC UA network system and the role of the anomaly detection and recovery system in the network system.
Fig. 2 shows a block diagram of the anomaly detection and recovery system.
Fig. 3 shows a diagram of as an example for detecting anomalies in OPC UA traffic with sensor output data over the number of sent packets.
Fig. 4 shows a detailed method for detecting anomalies in an OPC UA network system.
Fig. 5 shows a basic method for detecting anomalies in an OPC UA network system.

### Detailed description of the figures

Corresponding parts are provided with the same reference symbols in all figures.

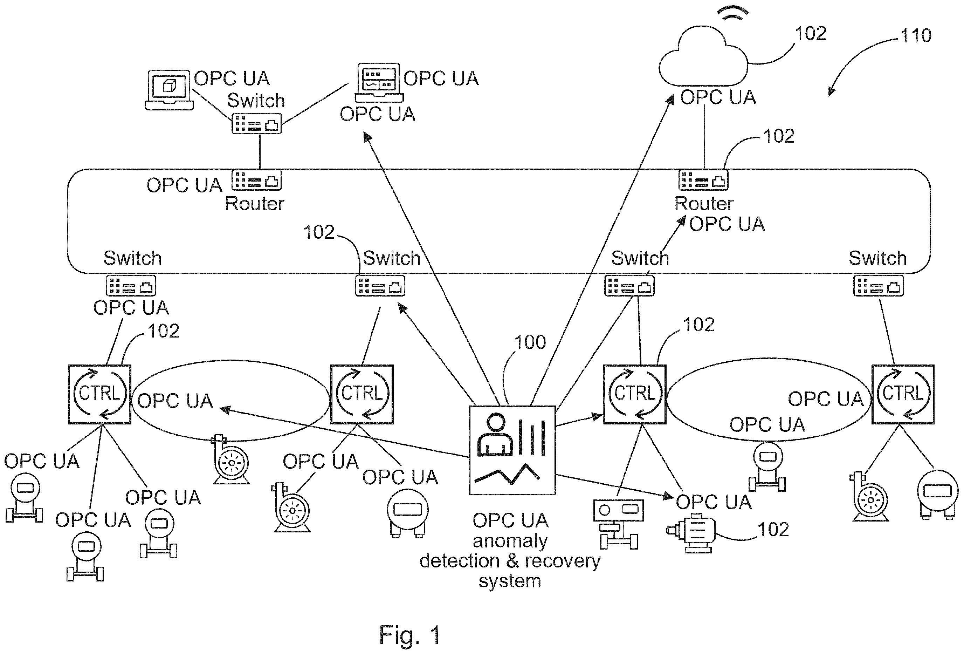

Fig. 1 shows a block diagram illustrating the use of the ADRS system 100. The system 100 consists of a software application that can run, for example, on a host server of a distributed control system. The system 100 is intended for monitoring OPC-UA traffic at various points within an industrial plant network 110, which may include thousands of OPC-UA devices 102 such sensors, actuators and controllers, in addition to switches and routers that implement their communication. In Fig. 1, only some of the OPC-UA devices 102 have been designated with the reference numeral 102 representative for all OPC-UA devices.

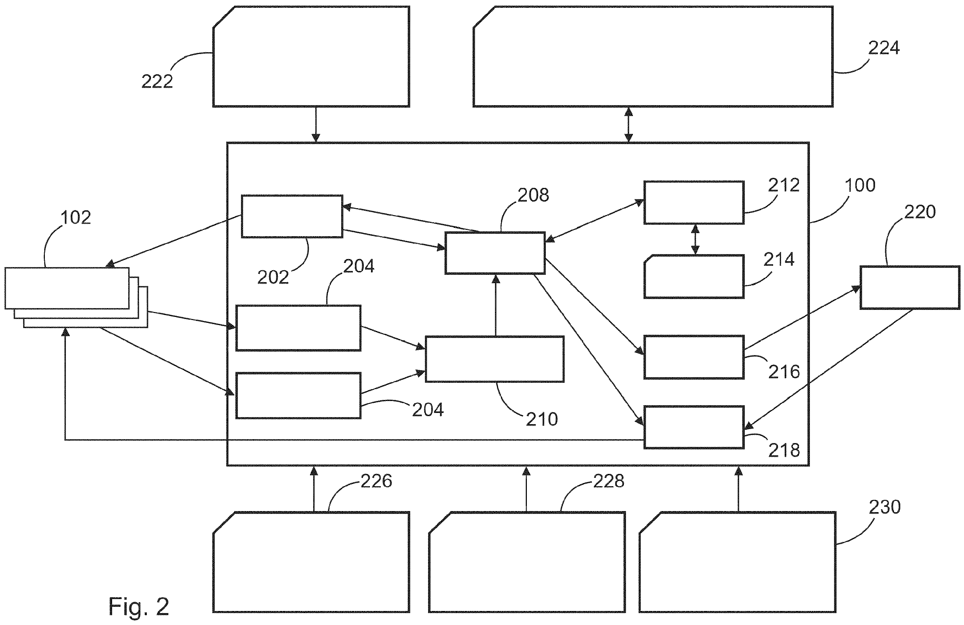

Fig. 2 shows the components of the ADRS system 100. The ADRS system includes an anomaly finder 202, at least one message receiver 204, an anomaly detector 208, an OPC UA traffic stream processor 210, a model trainer 212, an artificial neural network 214, an anomaly reporter 216, and an anomaly recoverer 218. The ADRS system has access to a memory such as one or more databases or configuration files providing information about OPC UA signal mapping 222 and domain-specific anomaly rules 224, and providing network discovery data 226, OPC UA credential 228 and plant engineering data 230. The OPC UA signal mapping 222 OPC UA credential data 228 provide connection data to the ADRS system 100. The network discovery data 226 comprises, for example, servers, server profiles, pub/sub brokers, etc. that are provided as IP endpoints to the ADRS system 100. Plant engineering data 230 are, for example, signal configurations, device configurations, plant topology, control programs, etc.

The anomaly finder 202 connects to OPC UA servers 102 and analyzes the servers 102. The connection is performed autonomously. For that, it uses OPC UA signal mapping data 222 for mapping device names to server or device addresses, respectively, and OPC UA credentials 228 such as server and user IDs and passwords. The anomaly finder 202 browses address spaces, searches for irregularities and creates fingerprints to detect later tampering, and reports the found anomalies to the anomaly detector 208. The anomaly finder 202 is further used by the anomaly detector 208, if the anomaly detector has detected anomalies on the traffic stream and decides that a deeper inspection of the device 102 the message originates from is required.

The OPC UA devices 102 send their messages to the message receivers 204. The message are collected by the OPC UA traffic stream processor 210, which provide the traffic stream containing the collected messages as processing input to the anomaly detector 208.

The anomaly detector 208 investigates the OPC UA traffic stream and the reported anomalies from the anomaly finder 202. It is aware of OPC UA semantics, for example from the standard specifications and companion standards, and can analyze OPC UA messages in detail. It may detect OPC UA quality codes in the messages, components that do not send messages anymore, non-standard conform messages, and Namur NE 107 health messages. The anomaly detector 208 can further send requests to the anomaly finder 202 for investigating anomalies on the OPC UA devices 102 based on a detected anomaly in the stream.

The artificial neural network 214 and the model trainer 212 are used to obtain initial plant-specific rules besides the already pre-defined domain-specific rules. The model of artificial neural network 214 trained during an initial phase may be updated during the operational phase, e.g., by feedback on the classification of the anomaly.

The anomaly reporter 216 publishes the results using a user interface 220, which then provides the possibility for a user to initiate the recovery manually.

The input data 222, 224, 226, 228, 230 is used, for example, by the message receivers 204 and the anomaly finder 202 to find and access the OPC UA devices, by the anomaly detector and anomaly finder for checking domain-specific and system-specific anomaly rules or mismatches in the configuration, to pre-configure the model of the artificial neural network, etc.

The anomaly recoverer 218 recovers the system from the anomaly and/or removes the anomaly

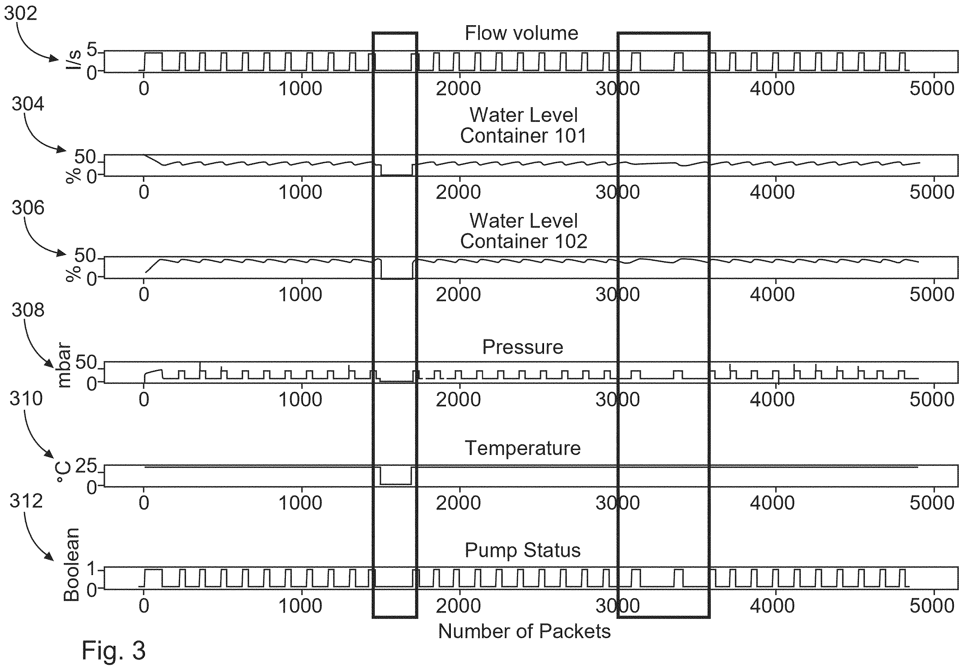

Fig. 3 shows a sort of time diagram as an example for detecting anomalies in OPC UA traffic.

The x-axes are the number of packets in the traffic stream. The sensors in the system provide signal values for flow 302, level 304 of a first container, level 306 of a second container, pressure 308, temperature 310 and pump status 312 via OPC UA messages. The figure visualizes the values of these messages (payload) over a transfer window of 5000 packets. A pump pumps water, originally contained in container 1, into container 2. Due to natural re-flow, container 2 is drained overtime. After the water level falls below a threshold value with a hysteresis, the pump is restarted and pumps water from container 1 into container 2 again. This normal behavior is shown during the packets 0 to 1500, from packet 1800 to packet 3000 and after packet 3500. There are two attacks, one from packet 1500 to packet 1800 and a further one from packet 3000 to packet 3500, marked by red frames. In the first attack, all sensor and actuator values are set to 0, indicating an error in the process, causing a disruption due to necessary investigation and maintenance. For the second attack, the frequency of the process is cut in half. This causes a change in the process, still indicating activity.

Such anomalies would likely not be detected by a generic intrusion detection system that is unaware of the semantics of the signals and the underlying production process. Furthermore, such anomalies would likely not trigger the alarm thresholds configured in the alarm management system of the distributed control system. The ADRS system would "know" the semantics based on OPC UA companion standards (e.g., for industrial field devices, robots, drives, etc.). For example, it can identify a specific signal as a temperature measurement, since this information is encoded into the OPC UA information model as an attribute of the signal.

There are many more OPC UA-specific anomalies that could be detected by the system. Some of them are listed in the following:
- OPC UA quality codes (e.g., good, bad, uncertain, etc.) in certain patterns
- Components not sending (periodic) messages anymore (but no node failure)
- Invalid messages, i.e., payload not according to UA specification
- Namur NE 107 health messages from the OPC UA for Field Devices specification
- Anomalies in robot kinematics communicated via OPC UA
- OPC UA messages out of the regular (e.g., perhaps learned) rhythm
- OPC UA messages coming late, too slow (without missing completely)
- Redundant connections out-of-sync
- Denial-of-service attacks via OPC UA messages
- Irregular number of client sessions on a server
- Unusual changes to an OPC UA address space
- Problems with certificates, security tokens (or soon to expire certificates)
- OPC UA and TSN QoS peculiarities
- Problems with drifting or imprecise timestamps on the server
- Problems with old (with known security issues) versions of OPC UA stacks / firmware
- etc.

Fig. 4 shows a flow diagram with the steps the ADRS 100 would perform when deployed in an industrial plant network 110:
Step 401: The ADRS 100 starts up and checks for the availability of all required input data (e.g., signal mapping 222, OPC UA credentials and certificates 228, pre-defined domain-specific rules 224, network discovery data 226, plant engineering data 230 etc.). In this step, the ADRS could query an OPC UA Global/Local Discovery server to obtain detailed knowledge on the OPC UA servers, i.e. devices 102, exposed in the network. Components of the ADRS such as the message receivers use the access data of the input data to connect to the OPC UA devices 102.
Step 402: The ADRS 100 enters a learning phase to obtain initial plant-specific rules besides the already pre-defined domain-specific rules. The message receivers 204 start monitoring the OPC UA traffic from the OPC UA devices 102, and forward it to the stream processors 210. In parallel, the anomaly finder 202 connects to individual OPC UA servers 102 and tries to detect first anomalies based on the domain-specific rules 224. It may also fingerprint individual address spaces in a "clean state" to pinpoint tampering later during regular operation.

The learning may be jump-started by providing pre-trained generic OPC UA communication models that are refined or parameterized based on the plant-specific setting derived from plant engineering data 230 before the learning phase.

Step 403: Based on an initial filtering and extraction, the anomaly detector 208 forwards user-approved anomalies to the model trainer 212 to perform the machine learning. To facilitate the training, the system 100 could be stimulated to simulate anomalies, so that the correct application of rules can be checked. Failed tests detected by human users can lead to additional refinements and extensions of the anomaly detection rules. Upon, 450, reaching a certain confidence level regarding the training (e.g., the number of detected anomalies per time interval drops below a pre-defined threshold), the next steps can be performed.

Step 404: The ADRS 100 now enters the regular operation phase. OPC UA traffic stream processors 210 streams the live OPC UA traffic from the message receivers 204 to the anomaly detector monitors, which are subject to stream processing and anomaly detection, and the anomaly detector monitors the live OPC UA traffic provided by the stream processors.

Step 405: Periodically, the anomaly finder 202 performs deep inspections of selected OPC UA servers 102 (i.e., connecting and reading out their information models), checks the former recorded fingerprints and may forward any potential anomalies to the anomaly detector 208.

Step 406: The anomaly detector 208 checks domain-specific and plant-specific rules 224 against the OPC UA traffic to identify irregular behavior. It may also use the formerly trained machine-learning model to find potential anomalies. In case 451 none of the mechanisms identify an anomaly, the traffic monitoring and live processing continues.

Step 407: If, 451, an anomaly rule fires, or the machine learning model suggests an anomaly, the anomaly detector 208 can autonomously decide to analyze the anomaly in more detail, e.g., by utilizing the anomaly finder 202 that connects to the suspicious message source, or by using system software tools to get more information (e.g., system performance counters). It might also decide to start a detailed recording of the suspicious behavior for later offline analysis and to record evidence for potential security breaches.

Step 408: At some point, the anomaly detector 208 is ready to perform a diagnosis and predict with a specific probability which particular anomaly type occurred. Anomalies that cannot be mapped to an existing anomaly type (e.g., "bad quality" data) need to be sent to the anomaly reporter 216 and further via user interface 220 to human operators who check the anomaly. The operator can provide feedback on the classification of the anomaly, which is fed back as additional labeled training data into the machine learning models of the artificial neural network 214. The models and additional labeled training data collected and fine-tuned in this way can be exported and used by experts to provide improved pre-trained models and derive updated plant-specific training cases that can be transferred to other plant installations.

Step 409: In case, 452, a pre-specified recovery action is available for the identified anomaly, the ADRS 100 may check whether the pre-requisites for performing the recovery are fulfilled (e.g., stand-by node available, or access rights to alter OPC UA traffic available). The ADRS prepares this recovery action.

Step 410: The ADRS 100 queries a human operator via user interface 220 with the detected anomaly and the suggested recovery action. The user may approve, reject, or alter both the system's diagnosis and/or the desired recovery action. The decision is recorded as a new labeled training example and used to refine the detection models and avoid annoying reoccurring false-positive anomalies (see step 408).

Step 411: If, 453, the user approves autonomous recovery, the system 100 performs the necessary steps (e.g., starting new nodes or altering a software container orchestration).

Step 412: If, 453, the user rejects the autonomous recovery, for example because of complex circumstances or information unknown to the system, the ADRS 100 requests manual recovery and returns to its regular mode of monitoring the OPC UA traffic (step 404).

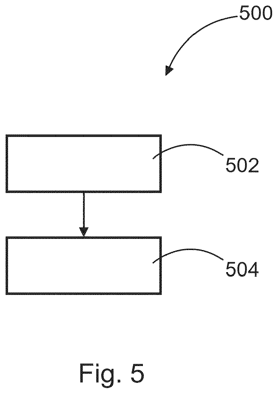

Fig. 5 shows a basic method 500 for detecting anomalies in an OPC UA-based industrial automation network system comprising OPC UA devices, wherein a detection and recovery system, ADRS, for an OPC UA-based industrial automation network comprises OPC UA devices, and wherein the ADRS comprises an anomaly detector and the network comprises OPC UA devices. The method comprises the following steps: monitoring 502, by the anomaly detector, an OPC UA traffic stream comprising OPC UA messages of the OPC UA devices, and analyzing 504, by the anomaly detector, the OPC UA traffic stream using OPC UA semantics of the industrial automation network for anomaly detection.

The system 100 is meant as complimentary to regular network intrusion detection systems or other anomaly detection systems. While the latter may broadly detect many more intrusions because of the wider coverages of protocols and interactions, the ADRS 100 can deeply detect more specific anomalies in OPC UA traffic, which are not necessarily intrusions by harmful attackers but also production process issues or programming errors.

Encrypted communication may severely affect the ADRS's functionality. If no decryption is possible, the system must fallback to only analyzing package header data and messaging patterns but can no longer analyze the payload in detail. In containerized environments, network traffic may be intercepted using transparent sidecar-containers as used in state-of-the-art service-mesh systems. In addition, the investigation of individual OPC UA servers 102 requires appropriate access right being granted by the ADRS 100. If such access rights are accumulated on a single system or host, it may become a sensitive point for the overall security of the system, and needs to be appropriately secured (DMZ, firewalls, etc.)

Applying machine learning to determine the "intended" behavior of the system for later reference needs to be conducted with special care. The ADRS 100 must be trained so that it does not generate too many false alarms, which would decrease its usefulness. In order to achieve this, special stimuli could be provided to the system, which provoke undesired but expected irregularities in the OPC UA traffic.

The performance of the anomaly detector 208 is a critical factor for the usefulness of the system. Some anomalies may require fast detection and recovery, in order to prevent greater damage. Thus, the ADRS 100 relies on appropriate hardware (possibly a cluster of multiple nodes) and efficient algorithms for the rule engine and machine learning model.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### List of reference signs

- 102: OPC UA devices
- 110: Industrial plant network
- 202: Anomaly finder
- 204: Message receiver
- 208: Anomaly detector
- 210: OPC UA traffic stream processor
- 212: Model trainer
- 214: Artificial neural network
- 216: Anomaly reporter
- 218: Anomaly recoverer
- 220: User interface
- 222: OPC UA signal mapping
- 224: Domain-specific anomaly rules
- 226: Network discovery data
- 228: OPC UA credentials
- 230: Plant engineering data
- 302: Signal of sensed flow
- 304: Signal of sensed level of a first container
- 306: Signal of sensed level of a second container
- 308: Signal of sensed pressure
- 310: Signal of sensed temperature
- 312: Signal of sensed pump status
- 401: Method step: ADRS start-up
- 402: Method step: learning phase
- 403: Method step: forwarding user-approved anomalies to model trainer
- 404: Method step: regular operation phase
- 405: Method step: deep inspection of selected OPC UA servers
- 406: Method step: checking domain/plant-specific rules
- 407: Method step: analyzing anomaly in detail
- 408: Method step: performing anomaly diagnosis
- 409: Method step: preparing recovery actions
- 410: Method step: getting approval for recovery
- 411: Method step: executing auto-recovery
- 412: Method step: requesting manual recovery
- 450: Method step: checking whether training is complete
- 451: Method step: checking if an anomaly rule fires
- 452: Method step: checking whether auto-recovery is possible
- 453: Method step: checking approval for recovery
- 500: Method for detecting anomalies
- 502: Method step: monitoring an OPC UA traffic stream
- 504: Method step: analyzing the OPC UA traffic stream

## Claims

1. Anomaly detection and recovery system (100), for an OPC UA-based industrial automation network (110) that comprises OPC UA devices (102); wherein the anomaly detection and recovery system (100) comprises
an anomaly detector (208), configured to monitor an OPC UA traffic stream comprising OPC UA messages of the OPC UA devices (102) and to analyze the OPC UA traffic stream using OPC UA semantics of the industrial automation network (110) for anomaly detection.

2. Anomaly detection and recovery system (100) according to claim 1, wherein the ADRS further comprises an anomaly finder, configured for connecting autonomously to OPC UA devices (102) and analyze the OPC UA devices (102), and to report identified anomalies to the anomaly detector (208).

3. Anomaly detection and recovery system (100) according to claim 1 or 2, wherein
the anomaly detector (208) comprises a rule engine configured to execute predefined domain-specific and/or plant-specific rules (224) on the OPC UA traffic stream.

4. Anomaly detection and recovery system (100) according to any of the previous claims, wherein the anomaly finder is configured to connect to the OPC UA devices (102) using at least one of
OPC UA signal mapping data (222), network discovery data (226), and OPC UA credentials (228) provided to the anomaly detection and recovery system (100).

5. Anomaly detection and recovery system (100) according to any of the previous claims, wherein the anomaly finder is configured to analyze the OPC UA devices (102) using plant engineering data (230).

6. Anomaly detection and recovery system (100) according to any of the previous claims, wherein the anomaly detection and recovery system (100) further comprises an OPC UA traffic stream processor (210), configured to create a message stream from received OPC UA messages and to provide the traffic stream to the anomaly detector (208).

7. Anomaly detection and recovery system (100) according to any of the previous claims, wherein the anomaly detection and recovery system (100) further comprises a message receiver (204), configured to receive OPC UA messages from an OPC UA device (102) and to provide the OPC UA messages to the OPC UA traffic stream processor (20).

8. Anomaly detection and recovery system (100) according to any of the previous claims, wherein the anomaly detection and recovery system (100) further comprises an artificial neural network (110), and the anomaly detector (208) is configured to use the artificial neural network (110) for detecting anomalies.

9. Anomaly detection and recovery system (100) according to any of the previous claims, wherein the anomaly detection and recovery system (100) further comprises an anomaly recoverer (218), configured to recover the system from the anomaly and/or to remove the anomaly.

10. OPC UA network (110) system comprising an anomaly detection and recovery system (100) according to any of the previous claims.

11. Method (500) for detecting anomalies in an OPC UA-based industrial automation network (110) system comprising OPC UA devices (102), wherein a detection and recovery system (100) for an OPC UA-based industrial automation network (110) comprises OPC UA devices (102); wherein the anomaly detection and recovery system (100) comprises an anomaly detector (208) and the network (110) comprises OPC UA devices (102), comprising the following steps:
Monitoring (502), by the anomaly detector (208), an OPC UA traffic stream comprising OPC UA messages of the OPC UA devices (102) and
Analyzing (504), by the anomaly detector (208), the OPC UA traffic stream using OPC UA semantics of the industrial automation network (110) for anomaly detection.

12. Program element, which, when executed on a processor of the anomaly detection and recovery system (100) according to any of claims 1 to 9, instructs the anomaly detection and recovery system (100) to perform the steps of the method according to claim 11.

13. Computer readable medium on which a program element according to claim 12 is stored.

14. Use of an anomaly detection and recovery system (100) according to any of claims 1 to 9 in an OPC UA network system.
